# EUROPÄISCHE PATENTSCHRIFT

(11) **EP 3 980 259 B1**
(45) Veröffentlichungstag und Bekanntmachung des Hinweises auf die Patenterteilung: **14.02.2024**
(21) Anmeldenummer: 20723799.1
(22) Anmeldetag: 22.04.2020
(51) Int. Cl.: B29D 30/28

(54) **VORRICHTUNG ZUR HERSTELLUNG EINES REIFENROHLINGS**
DEVICE FOR PRODUCING A GREEN TIRE
DISPOSITIF DE PRODUCTION D'UN PNEU CRU

(30) Priorität: 05.06.2019 DE 102019208218
(43) Veröffentlichungstag der Anmeldung: 13.04.2022
(73) Patentinhaber: Continental Reifen Deutschland GmbH, 30165 Hannover (DE)
(72) Erfinder: SCHISCHKE, Henrik, 30419 Hannover (DE); GÜMMER, Oliver, 30419 Hannover (DE); HARTMANN, Uwe, 30419 Hannover (DE); MEIER, Marvin, 30419 Hannover (DE); KASNY, Rostislav, 30419 Hannover (DE)
(74) Vertreter: Continental Corporation
(86) Internationale Anmeldenummer: PCT/EP2020/061212
(87) Internationale Veröffentlichungsnummer: WO 2020/244843

(56) Entgegenhaltungen:
- EP-A1- 1 509 388
- EP-A2- 0 429 286
- US-A- 2 321 163

## Beschreibung

Die Erfindung betrifft eine Vorrichtung zur Herstellung eines Reifenrohlings mit einer mit einem Antriebsdrehmoment drehbar antreibbaren Bombiertrommel zur Aufnahme einer Karkasse und eines Gürtel-/Laufstreifenpakets des Reifenrohlings und mit mindestens einer über einen Antriebsmotor gegensinnig zur Bombiertrommel mit einem Ausgleichsdrehmoment drehbar antreibbaren Anrollscheibe, die radial in Richtung der Bombiertrommel verfahrbar und am Umfang des auf die Bombiertrommel aufgenommenen Gürtel-/Laufstreifenpakets anlegbar ist.

Die Erfindung betrifft ferner auch ein Verfahren zur Herstellung eines solchen Reifenrohlings.

Im Zuge der Herstellung von Luftreifen, beispielsweise großformatigen Lkw-Luftreifen wird auf einer Karkasstrommel zunächst die Karkasse des Reifens hergestellt, anschließend wird die Karkasse auf eine weitere Arbeitsstation, die Bombiertrommel übergeben, auf der ein Gürtel-/Laufstreifenpakets auf die Karkasse aufgelegt und mittels mindestens einer Anrollscheibe mit der Karkasse vorverbunden wird.

Zu diesem Zweck wird die Karkasse aufgeblasen, bis sie sich in den Durchmesser des Gürtel-/Laufstreifenpakets legt. Im Anschluss werden die Seitenwände hochgeschlagen. Damit sich die einzelnen Reifenbauteile gut verbinden und Luft zwischen den Lagen hinaus gedrückt wird, folgt ein Anrollen des Reifenrohlings. Dazu wird mindestens eine Anrollscheibe radial mit einer definierten Kraft gegen den Umfang des Gürtel-/Laufstreifenpakets des auf der Bombiertrommel rotierenden Reifenrohlings gedrückt und dabei axial verfahren. In gleicher Weise geschieht dies auch im Bereich der Seitenwand, nur werden hierbei die Anrollscheibe axial gegen die Seitenwand gedrückt und dabei radial verfahren. Für möglichst geringe tangentiale Kräfte in Umfangsrichtung ist die mindestens eine Anrollscheibe drehbar gelagert.

Zum Anrollen eines Gürtel-/Laufstreifenpakets sind insbesondere bei der Lkw-Reifenproduktion hohe radiale Kräfte nötig. Infolge der Lagerreibung in der Anrollscheibe und der Umformarbeit während des Anrollens entsteht zusätzlich zur erwünschten Radialkraft auch eine unerwünschte Kraft in Umfangs- bzw. tangentialer Richtung. Diese Kraft führt zu einer unerwünschten Verzerrung des Einlagenmaterials. Um diesem Effekt zu begegnen, werden einige Reifenrohlinge zuerst in positiver Drehrichtung und danach in negativer Drehrichtung angerollt. Dies hat jedoch einen negativen Einfluss auf die erforderliche Zykluszeit.

Aus der EP 2 445 707 B1 ist es bekannt, die Anrollscheibe mit einem Antriebsmotor gegensinnig zur Bombiertrommel anzutreiben, sodass ein Ausgleichsdrehmoment für die unerwünschte Kraft in Umfangs- bzw. tangentialer Richtung erzeugt werden kann, wodurch der Verzerrung des Einlagenmaterials entgegengewirkt wird. Allerdings ist es hierbei erforderlich, die Anrollscheibe mit dem Antriebsmotor bereits vor dem Anlegen auf den Umfang des sich drehenden Gürtel-/Laufstreifenpakets auf die erforderliche Umfangsgeschwindigkeit zu beschleunigen, damit im Moment des Aufsetzens kein Schlupf entsteht, der wiederum eine Verzerrung des Einlagenmaterials hervorrufen würde. Diese motorische Vorbeschleunigung erfordert eine regelungstechnisch aufwändige Berechnung der einzustellenden und einzuregelnden Umfangsgeschwindigkeit, was ebenfalls verbesserungswürdig erscheint.

In der US 2321163 A ist eine Vorrichtung zum Bau von Reifen offenbart. Weiter wird in der EP 0 429 286 A2 eine Vorrichtung zum Anbringen eines Reifenteils offenbart.

Aufgabe der Erfindung ist es daher, eine gattungsgemäße Vorrichtung und ein Verfahren mit mindestens einer drehbar antreibbaren Ausgleichsscheibe dahingehend weiterzubilden, dass sie besonders einfach und funktionssicher realisiert bzw. durchgeführt werden können.

Zur Lösung der gestellten Aufgabe wird erfindungsgemäß die Ausgestaltung einer Vorrichtung gemäß den Merkmalen des Patentanspruchs 1 vorgeschlagen.

Ein Verfahren zur Lösung der gestellten Aufgabe ist Gegenstand des Patentanspruchs 7.

Vorteilhafte Ausgestaltungen und Weiterbildungen der Erfindung sind Gegenstand der abhängigen Ansprüche.

Die Erfindung schlägt vor, die Vorrichtung dadurch weiterzubilden, dass die mindestens eine Anrollscheibe über eine Freilauflager aufweisende Antriebswelle des Antriebsmotors antreibbar ist und die Freilauflager so angeordnet sind, dass die mindestens eine Anrollscheibe gegensinnig zur Bombiertrommel frei drehbar gelagert ist und die Freilauflager bei Drehung der Antriebswelle in Drehrichtung des Antriebsmotors momentenübertragend einkuppeln.

Auf diese Weise ist es möglich, die mindestens eine Anrollscheibe zu Beginn des Anrollvorgangs zunächst antriebslos auf den Umfang des Gürtel-/Laufstreifenpakets aufzulegen, woraufhin die Anrollscheibe aufgrund der freien Drehbarkeit des entsprechend orientierten Freilauflagers sich gegenläufig zum Gürtel-/Laufstreifenpaket und der Bombiertrommel mit dreht und somit selbsttätig die korrekte Umfangsgeschwindigkeit aufnimmt, die vom Umfang des Gürtel-/Laufstreifenpakets bestimmt wird. Der dabei auftretende Schlupf an der nicht angetriebenen Anrollscheibe ist vernachlässigbar gering. Anschließend kann im weiteren Zuge des Anrollens die gewünschte Antriebskraft bzw. der Anpressdruck von der mindestens einen Anrollscheibe auf den Umfang des Gürtel-Laufstreifenpakets ausgeübt werden, wobei in an sich bekannter Weise durch Aktivieren des Antriebsmotors der Anrollscheibe dass zum Ausgleich der auftretenden tangentialen Kraft erforderliche Ausgleichsdrehmoment aufgebracht werden kann, um einer Verzerrung des Einlagenmaterials entgegenzuwirken. Der Regelungsaufwand für die Regelung des Antriebes der mindestens einen Anrollscheibe wird damit auf ein Minimum reduziert und die Vorrichtung erreicht aufgrund ihrer selbsttätigen Drehzahl- bzw. Umfangsgeschwindigkeitseinstellung höchste Produktionssicherheit.

Ferner kann die Vorrichtung auch bei einem Ausfall des Antriebsmotors betrieben werden, da die freie Drehbarkeit gegenläufig zur Bombiertrommel und dem darauf befindlichen Reifenrohling aufgrund des erfindungsgemäß vorgesehenen Freilaufs stets gewährleistet ist.

Nach einem Vorschlag der Erfindung werden die Freilauflager als Wälzlagerfreiläufe ausgebildet, die handelsüblich erhältlich sind und beispielsweise auf der Antriebswelle der mindestens einen Anrollscheibe angeordnet werden können.

Nach einem weiteren Vorschlag der Erfindung kann die Antriebswelle vom Antriebsmotor entweder direkt oder indirekt über ein zwischen Antriebsmotor und Antriebswelle zwischengeschaltetes Getriebe angetrieben werden. Bei dem Getriebe kann es sich beispielsweise um einen Ketten- oder Riemenantrieb oder ein Zahnradgetriebe handeln.

Weiterhin wird vorgeschlagen, dass eine Regelungsvorrichtung zum Regeln des vom Antriebsmotor erzeugten Ausgleichsdrehmoments in Abhängigkeit von Antriebsdrehmoment zum Antrieb der Bombiertrommel vorgesehen ist. Die Regelungsvorrichtung umfasst eine Messeinrichtung zur Messung des Antriebsdrehmomentes und eine Steuereinrichtung zum Erzeugen eines aus dem gemessenen Antriebsdrehmoment abgeleiteten Steuersignals für das Ausgleichsdrehmoment des Antriebsmotors. Auf diese Weise wird eine einfache und effektive Regelung des Antriebsmotors zur Erzeugung des Ausgleichsdrehmomentes geschaffen.

So kann der Rotationsantrieb der Bombiertrommel in einem üblichen Anwendungsbeispiel ein konstantes Antriebsdrehmoment von zum Beispiel 10 Newtonmeter erzeugen. Dieses Antriebsdrehmoment dient der Regelungseinrichtung als Referenzdrehmoment und wird beispielsweise zu Beginn des Anrollvorganges, d. h. sobald die mindestens eine Anrollscheibe aufgrund ihrer freien Drehbarkeit auf die Umfangsgeschwindigkeit des Gürtel-/Laufstreifenpakets auf der Bombiertrommel beschleunigt worden ist, gemessen. Sobald nun über die mindestens eine Anrollscheibe der gewünschte aufzubringenden Anpressdruck eingestellt wird, in dem die Anrollscheibe radial in Richtung der Bombiertrommel verlagert wird, zum Beispiel mittels eines entsprechenden Vorschubantriebes, würde aufgrund der ansteigenden Tangentialkräfte das erforderliche Antriebsdrehmoment zum Aufrechterhalten der Drehbewegung der Bombiertrommel mit dem darauf befindlichen Gürtel-/Laufstreifenpaket ansteigen, zum Beispiel auf etwa 35 Newtonmeter. Die im Vergleich zum Referenzdrehmoment zusätzlich anfallenden hier beispielsweise 25 Newtonmeter können jedoch als Ausgleichsdrehmoment durch entsprechende Ansteuerung des Antriebsmotors aufgebracht werden, da die Regelungseinrichtung stetig aus dem aktuell gemessenen Antriebsdrehmoment eine entsprechende Steuerung bzw. ein Steuersignal für das Ausgleichsdrehmoment des Antriebsmotors berechnet. Aufgrund der Orientierung der Freilauflager wird bei der steuersignalbedingten Aktivierung des Antriebsmotors ein Drehmoment auf die Antriebswelle aufgebracht, sodass diese in Rotation versetzt wird und die Freilauflager momentenübertragend einkuppeln, sodass das vom Antriebsmotor aufgebrachte Drehmoment als Ausgleichsdrehmoment auf die mindestens eine Anrollscheibe übertragen wird.

Im Ergebnis wird somit das infolge des Anpressdruckes zusätzlich erforderliche Antriebsdrehmoment für die Drehung der Bombiertrommel im Vergleich zum Referenzdrehmoment idealerweise vollständig und innerhalb kürzester Zeit vom Antriebsmotor durch Erzeugung eines entsprechenden Ausgleichsdrehmoments ausgeglichen, sodass das Antriebsdrehmoment auch im weiteren Fortgang des Anrollprozesses Prozesses nicht über das Referenzdrehmoment ansteigt. Eine tangentiale Kraftkomponente im Anrollpunkt wird von daher nicht auftreten und ein Verzerren oder Verschieben einzelner Reifenbaukomponenten somit vermieden.

Mit besonderem Vorteil ist die Regelungseinrichtung so eingerichtet, dass die mindestens eine Anrollscheibe mit deaktiviertem Antriebsmotor am Umfang des Gürtel-/Laufstreifenpakets anlegbar ist und anschließend das Steuersignal erzeugbar und der Antriebsmotor entsprechend aktivierbar ist. Die aufgrund der Freilauflager mögliche freie Drehbarkeit der mindestens einen Anrollscheibe gegenläufig zur Bombiertrommel ermöglicht von daher auf einfache Weise die selbsttätige Beschleunigung der mindestens einen Anrollscheibe auf die Umfangsgeschwindigkeit des Gürtel-/Laufstreifenpakets auf der Bombiertrommel, sobald die Anrollscheibe in umfänglichen Kontakt mit dem Gürtel-/Laufstreifenpaket kommt. Anschließend kann durch Aufnahme der Steuersignalerzeugung durch die Regelungseinrichtung der Antriebsmotor aktiviert bzw. zugeschaltet werden, um das erforderliche Ausgleichsdrehmoment aufzubringen.

Dies kann beispielsweise durch einen mit der Regelungseinrichtung kommunizierenden Drehzahlsensor an der mindestens einen Anrollscheibe initiiert werden.

Es versteht sich, dass die mindestens eine Anrollscheibe nicht nur zur Erzeugung eines gewünschten Anpressdrucks radial in Bezug auf die Bombiertrommel verfahrbar ist, sondern zum Überstreichen der gesamten Breite des Reifenrohlings auch axial in Bezug auf die Bombiertrommel verfahren werden kann. Ebenso kann in an sich bekannter Weise auf diese Weise auch eine Bearbeitung der Seitenflanken des Reifenrohlings erfolgen.

Das erfindungsgemäße Verfahren zur Herstellung eines Reifenrohlings beruht auf der Abfolge der Schritte
a) Bereitstellung einer Karkasse und eines Gürtel-/Laufstreifenpakets des Reifenrohlings auf einer drehbaren Bombiertrommel und drehendes Antreiben der Bombiertrommel mit einem Antriebsdrehmoment;
b) radiales Verfahren mindestens einer gegensinnig zur Bombiertrommel drehbaren und mit einem Ausgleichsdrehmoment beaufschlagbaren Anrollscheibe in Richtung der Bombiertrommel und Anlegen derselben am Umfang des auf der Bombiertrommel aufgenommenen Gürtel-/Laufstreifenpakets und Aufbringen eines Ausgleichsdrehmoments.

Erfindungsgemäß wird vorgeschlagen, dass die mindestens eine Anrollscheibe zunächst freidrehend und ohne aufgebrachtes Ausgleichsdrehmoment am Umfang des Gürtel-/Laufstreifenpakets angelegt und auf die Umfangsgeschwindigkeit der drehend angetriebenen Bombiertrommel durch Reibschluss beschleunigt wird und anschließend mit dem Ausgleichsdrehmoment beaufschlagt wird.

Das Antriebsdrehmoment wird erfindungsgemäß fortlaufend gemessen und das Ausgleichsdrehmoment nach Maßgabe des gemessenen Antriebsdrehmomentes so eingeregelt, dass das Antriebsdrehmoment im Wesentlichen konstant gehalten wird.

Nach einem weiteren Vorschlag der Erfindung wird die mindestens eine Anrollscheibe nach dem Anlegen am Umfang des Gürtel-/Laufstreifenpakets axial in Bezug auf die Bombiertrommel verfahren.

Weitere Ausgestaltungen und Einzelheiten der Erfindung werden nachfolgend anhand der ein Ausführungsbeispiel darstellenden Zeichnung erläutert. Es zeigen:
Figur 1 eine Vorrichtung gemäß der Erfindung in einer Seitenansicht;
Figur 2eine Einzelheit der Vorrichtung gemäß Figur 1 in vergrößerter Darstellung.

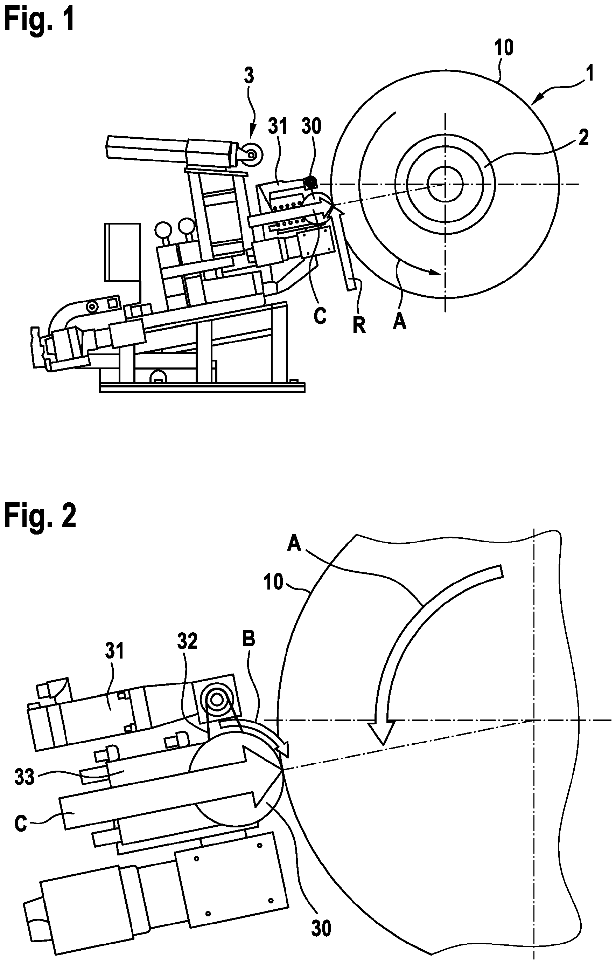

Aus den Figuren 1 und 2 ist eine mit einer drehbaren Bombiertrommel 2 ausgerüstete Bombierstation einer Vorrichtung zur Herstellung eines Reifenrohlings 1 ersichtlich, wie sie beispielsweise zur Herstellung von Lkw-Luftreifen verwendet wird. Aus Gründen der besseren Übersichtlichkeit wurde die Bombiertrommel 2 in der Figur 2 nicht getrennt vom Reifenrohling 1 dargestellt. Der Reifenrohling 1 wurde zuvor auf einer separaten, hier nicht dargestellten Karkasstrommel vorgefertigt und mittels einer ebenfalls nicht dargestellten Übergabeeinrichtung auf der drehbaren Bombiertrommel 2 aufgenommen. Am Umfang 10 des Reifenrohlings 1 wird mittels der Bombiertrommel 2 ein nicht näher dargestelltes Gürtel-/Laufstreifenpaket des Reifenrohlings aufgelegt und durch Anwalzen am Reifenrohling 1 vorfixiert, bevor dieser in einer nachfolgenden Arbeitsstation zum fertigen Luftreifen vulkanisiert wird.

Zum Anwalzen wird die global mit Bezugszeichen 3 versehene Anrollvorrichtung verwendet, die über zwei in Bezug auf die Zeichenebene hintereinander angeordnete Anrollscheiben 30 verfügt. Diese Anrollscheiben 30 sind mittels eines aus der Figur 2 näher dargestellten Linearantriebes 33 radial in Bezug auf den auf der Bombiertrommel 2 aufgenommenen Reifenrohling 1 verlagerbar, sodass sie am Umfang 10 des Reifenrohlings 1 zur Anlage kommen und gemäß Pfeil C bei weiterem Vorschub eine vom Grad des Vorschubs abhängige Anpressdruckkraft auf das am Umfang 10 des Reifenrohlings 1 angeordnete Gürtel-/Laufstreifenpaket ausüben. Hierdurch werden die gewünschte Verbindung hergestellt und eventuelle Lufteinschlüsse entfernt.

Zu diesem Zweck sind die Anrollscheiben 30 gegenläufig zur durch Pfeil A verdeutlichten Rotationsrichtung des Reifenrohlings 1 auf der Bombiertrommel 2 drehbar gelagert.

Sofern beim Anrollen lediglich der Anpressdruck gemäß Pfeil C auf den sich mit der Bombiertrommel 2 drehenden Reifenrohling 1 ausgeübt wird, erzeugt dies im Anrollpunkt, d.h. Kontaktpunkt zwischen Reifenrohling 1 und Anrollscheibe 30 eine entgegen der Drehrichtung des Reifenrohlings 1 gerichtete tangentiale Kraft R, die zu einem Verzerren oder Verschieben einzelner Reifenbaukomponenten führen kann und außerordentlich unerwünscht ist.

Um diesem Problem zu begegnen, sind die Anrollscheiben 30, wie insbesondere aus der Figur 2 ersichtlich, mit einem Antriebsmotor 31 versehen, der im dargestellten Ausführungsbeispiel über einen Riemen- oder Kettenantrieb 32 eine nicht näher dargestellte Antriebswelle antreibt, auf der die Anrollscheibe 30 montiert und insoweit vom Antriebsmotor 31 gegenläufig zum Reifenrohlings 10 auf der Bombiertrommel 2 in Rotation versetzt werden kann. Zusätzlich ist im Antriebsstrang zwischen Antriebsmotor 31 und Anrollscheibe 30 an einer geeigneten Stelle mindestens ein Freilauflager vorgesehen, beispielsweise ein entsprechender Wälzlagerfreilauf, mit welchem die Anrollscheibe 30 auf der vom Antriebsmotor 31 angetriebenen Antriebswelle gelagert ist.

Das Freilauflager ist hierbei so orientiert, dass die Anrollscheibe 30 in der gewünschten Drehrichtung gegenläufig zur Drehrichtung der Bombiertrommel 2 und des darauf befindlichen Reifenrohlings 1 frei drehbar gelagert ist, jedoch in entgegengesetzter Richtung gesperrt wird. Dies hat zur Folge, dass bei Aktivierung des Antriebsmotors 31 und entsprechender Drehung der Antriebswelle in Richtung der freien Drehbarkeit der Anrollscheibe 30, d. h. ebenfalls gegenläufig zur Bombiertrommel 2 und dem Reifenrohling 1 das Freilauflager momentenübertragend einkuppelt.

Es ist möglich, mit einer geeigneten Regelungseinrichtung fortlaufend das Antriebsdrehmoment Ader Bombiertrommel 2 am hier nicht näher dargestellten Drehantrieb der Bombiertrommel 2 abzugreifen. Sobald die mindestens eine Anrollscheibe 30 unter Aufbringung eines gewünschten Anpressdruckes C am Umfang 10 des Reifenrohlings 1 zur Anlage kommt, würde dies aufgrund der sich einstellenden entgegengesetzt gerichteten tangentialen Kraft R zu einem Anstieg des Antriebsdrehmoments A führen, welcher unmittelbar von der Regelungseinrichtung erfasst wird. Diese erzeugt dementsprechend ein Steuersignal für den Antriebsmotor 31, der sodann über den Antriebsriemen 32 ein entsprechendes Ausgleichsdrehmoment B gegenläufig zum Antriebsdrehmoment A auf die Anrollscheibe 30 ausübt, da die Freilauflager bei Anliegen eines solchen Ausgleichsdrehmoments B momentenübertragend einkuppeln. Das Ausgleichsdrehmoment B wird dabei von der Regelungseinrichtung so bemessen, dass die entgegengesetzt gerichtete tangentiale Kraft R aufgehoben wird, sodass das von der Regelungseinrichtung gemessene Antriebsdrehmoment A an der Bombiertrommel 2 idealerweise konstant bleibt. Auf diese Weise kann einem unerwünschten Verzerren oder Verschieben einzelner Reifenbaukomponenten des Reifenrohlings 1 infolge tangentialer Kräfte vorgebeugt werden.

Darüber hinaus gewährleistet das im Antriebsstrang zwischen Antriebsmotor 31 und Anrollscheibe 30 vorgesehene Freilauflager einen selbsttätigen Start des Anrollvorgangs insbesondere zu dem Zeitpunkt, zu welchem die Anrollscheibe 30 erstmalig durch Vorverlagerung mittels des radialen Vorschubantriebes 33 mit dem Umfang 10 des rotierenden Reifenrohlings 1 in Kontakt kommt. Aufgrund der durch das Freilauflager bedingten freien Drehbarkeit der Anrollscheibe 30 gegenläufig zum mitsamt der Bombiertrommel 2 rotierenden Reifenrohlings 1 kann die mindestens eine Anrollscheibe 30 selbsttätig durch den sich einstellenden Reibschluss auf die erforderliche Umfangsgeschwindigkeit beschleunigt werden, ohne dass eine Vorausberechnung dieser Umfangsgeschwindigkeit und entsprechende Einstellung des Antriebsmotors 31 erforderlich wäre. Die durch den Reibschluss auftretenden tangentialen Kräfte sind vernachlässigbar gering. Somit kann zu Beginn des Anrollvorganges zunächst ein antriebsloses Aufsetzen der Anrollscheiben 30 auf dem Umfang 10 des Reifenrohlings 1 erfolgen, wodurch die Anrollscheiben 30 selbsttätig auf die korrekte Umfangsgeschwindigkeit beschleunigt werden. Anschließend erfolgt der weitere Vorschub der Anrollscheiben 30 mittels des Vorschubantriebes 33 zur Erzeugung des gewünschten Anpressdrucks C, wobei gleichzeitig die Regelungseinrichtung die Messung des Antriebsdrehmoments A durchführt und entsprechende Steuersignale für die Erzeugung des Ausgleichsdrehmoments B mittels des Antriebsmotors 31 berechnet und an diesen weitergibt. Während insofern das Aufsetzen der Anrollscheiben 30 bei deaktiviertem Antriebsmotor 31 erfolgt, wird der Antriebsmotor 31 von der Regelungsvorrichtung unmittelbar nach dem reibschlussbedingten Beschleunigen auf die Umfangsgeschwindigkeit aktiviert und zur Erzeugung der erforderlichen Ausgleichsdrehmomente B angesteuert.

Es ist somit auf besonders einfache Weise möglich, ein hochgenaues Anrollen des Gürtel-/Laufstreifenpakets auf dem Reifenrohling 1 mit geringem Regelungsaufwand durchzuführen.

Es versteht sich, dass die vorangehend erläuterte Vorrichtung und das Verfahren nicht auf die Anwendung in mehrstufigen Reifenbaumaschinen mit räumlich getrennten Karkasstrommeln und Bombiertrommeln beschränkt ist, sondern auch bei Einstufenmaschinen, bei denen der gesamte Reifenaufbau auf einer Karkasstrommel bewirkt wird, Anwendung finden kann.

### Bezugszeichenliste

### (Teil der Beschreibung)

1: Reifenrohling
2: Bombiertrommel
3: Anrollvorrichtung
10: Umfang des Reifenrohlings
30: Anrollscheibe
31: Antriebsmotor
32: Antriebsriemen
33: radialer Vorschubantrieb
A: Antriebsdrehmoment
B: Ausgleichsdrehmoment
C: Anpressdruck
R: tangentiale Rückkraft

## Patentansprüche

1. Vorrichtung zur Herstellung eines Reifenrohlings (1) mit einer mit einem Antriebsdrehmoment (A) drehbar antreibbaren Bombiertrommel (2) zur Aufnahme einer Karkasse und eines Gürtel-/Laufstreifenpakets des Reifenrohlings (1) und mit mindestens einer über einen Antriebsmotor (31) gegensinnig zur Bombiertrommel (2) mit einem Ausgleichsdrehmoment (B) drehbar antreibbaren Anrollscheibe (30), die radial in Richtung der Bombiertrommel (2) verfahrbar und am Umfang (10) des auf der Bombiertrommel (2) aufgenommenen Gürtel-/Laufstreifenpakets anlegbar ist, **wobei** die mindestens eine Anrollscheibe (30) über eine Freilauflager aufweisende Antriebswelle des Antriebsmotors (31) antreibbar ist und die Freilauflager so angeordnet sind, dass die mindestens eine Anrollscheibe (30) gegensinnig zur Bombiertrommel (2) frei drehbar gelagert ist und die Freilauflager bei Drehung der Antriebswelle in Drehrichtung des Antriebsmotors (31) momentenübertragend einkuppeln, **dadurch gekennzeichnet, dass** eine Regelungsvorrichtung zum Regeln des vom Antriebsmotor (31) erzeugten Ausgleichsdrehmoments (B) in Abhängigkeit vom Antriebsdrehmoment (A) zum Antrieb der Bombiertrommel (2) vorgesehen ist, die eine Messeinrichtung zur Messung des Antriebsdrehmomentes (A) und eine Steuereinrichtung zum Erzeugen eines aus dem gemessenen Antriebsdrehmoment (A) abgeleiteten Steuersignals für das Ausgleichsdrehmoment (B) des Antriebsmotors (31) umfasst.

2. Vorrichtung nach Anspruch 1, **dadurch gekennzeichnet, dass** die Freilauflager als Wälzlagerfreiläufe ausgebildet sind.

3. Vorrichtung nach Anspruch 1 oder 2, **dadurch gekennzeichnet, dass** die Antriebswelle vom Antriebsmotor (31) direkt oder indirekt über ein zwischen Antriebsmotor (31) und Antriebswelle zwischengeschaltetes Getriebe (32) antreibbar ist.

4. Vorrichtung nach einem der vorhergehenden Ansprüche, **dadurch gekennzeichnet, dass** die Regelungseinrichtung so eingerichtet ist, dass die mindestens eine Anrollscheibe (30) mit deaktiviertem Antriebsmotor (31) am Umfang (10) des Gürtel-/Laufstreifenpakets anlegbar ist und anschließend das Steuersignal erzeugbar und der Antriebsmotor (31) entsprechend aktivierbar ist.

5. Vorrichtung nach einem der Ansprüche 1 bis 4, **dadurch gekennzeichnet, dass** die mindestens eine Anrollscheibe (30) auch axial entlang einer Drehachse der Bombiertrommel (2) verfahrbar ist.

6. Verfahren zur Herstellung eines Reifenrohlings (1), umfassend die Schritte:
a) Bereitstellung einer Karkasse und eines Gürtel-/Laufstreifenpakets des Reifenrohlings (1) auf einer drehbaren Bombiertrommel (2) und drehendes Antreiben der Bombiertrommel (2) mit einem Antriebsdrehmoment (A);
b) Radiales Verfahren mindestens einer gegensinnig zur Bombiertrommel (2) drehbaren und mit einem Ausgleichsdrehmoment (B) beaufschlagbaren Anrollscheibe (30) in Richtung der Bombiertrommel (2) und Anlegen derselben am Umfang (10) des auf der Bombiertrommel (2) aufgenommenen Gürtel-/Laufstreifenpakets und Aufbringen des Ausgleichsdrehmomentes (A);
**dadurch gekennzeichnet, dass** die mindestens eine Anrollscheibe (30) zunächst frei drehend und ohne aufgebrachtes Ausgleichsdrehmoment (B) am Umfang (10) des Gürtel-/Laufstreifenpakets angelegt und auf die Umfangsgeschwindigkeit der drehend angetriebenen Bombiertrommel (2) durch Reibschluss beschleunigt wird und anschließend mit dem Ausgleichsdrehmoment (B) beaufschlagt wird, wobei das Antriebsdrehmoment (A) fortlaufend gemessen und das Ausgleichsdrehmoment (B) nach Maßgabe des gemessenen Antriebsdrehmomentes (A) so eingeregelt wird, dass das Antriebsdrehmoment (B) im Wesentlichen konstant gehalten wird.

7. Verfahren nach Anspruch 6, **dadurch gekennzeichnet, dass** die mindestens eine Anrollscheibe (30) nach dem Anlegen am Umfang (10) des Gürtel-/Laufstreifenpakets axial in Bezug auf die Bombiertrommel (2) verfahren wird.

## Claims

1. Device for producing a green tyre (1), having a shaping drum (2), which is able to be rotatably driven by a drive torque (A), for receiving a carcass and a belt/tread pack of the green tyre (1), and having at least one contact disc (30) which by way of a drive motor (31) is able to be rotatably driven in the opposite direction to the shaping drum (2) by a compensating torque (B), said contact disc (30) being displaceable radially in the direction of the shaping drum (2) and being able to be brought to bear on the circumference (10) of the belt/tread pack received on the shaping drum (2), **wherein** the at least one contact disc (30) is able to be driven by way of a drive shaft of the drive motor (31) that has overrunning clutch bearings, and the overrunning clutch bearings are disposed in such a way that the at least one contact disc (30) is mounted so as to be freely rotatable in the opposite direction to the shaping drum (2), and the overrunning clutch bearings engage in a torque-transmitting manner when the drive shaft rotates in the rotating direction of the drive motor (31), **characterized in that** a feedback-control device for feedback-controlling the compensating torque (B) generated by the drive motor (31) as a function of the drive torque (A) for driving the shaping drum (2) is provided, said feedback-control device comprising a measuring apparatus for measuring the drive torque (A) and a control apparatus for generating a control signal for the compensating torque (B) of the drive motor (31), said control signal being derived from the measured drive torque (A).

2. Device according to Claim 1, **characterized in that** the overrunning clutch bearings are configured as roller bearing overrunning clutches.

3. Device according to Claim 1 or 2, **characterized in that** the drive shaft is able to be driven by the drive motor (31) directly or indirectly by way of a gearbox (32) disposed between the drive motor (31) and the drive shaft.

4. Device according to one of the preceding claims, **characterized in that** the feedback-control apparatus is specified in such a way that the at least one contact disc (30) is able to be brought to bear on the circumference (10) of the belt/tread pack with the drive motor (31) deactivated, and subsequently the control signal is able to be generated and the drive motor (31) is correspondingly activatable.

5. Device according to one of Claims 1 to 4, **characterized in that** the at least one contact disc (30) is also displaceable axially along a rotation axis of the shaping drum (2).

6. Method for producing a green tyre (1), comprising the following steps:
a) providing a carcass and a belt/tread pack of the green tyre (1) on a rotatable shaping drum (2), and rotationally driving the shaping drum (2) by a drive torque (A);
b) radially displacing at least one contact disc (30), which is rotatable in the opposite direction to the shaping drum (2) and is able to be impinged with a compensating torque (B), in the direction of the shaping drum (2), and bringing to bear said at least one contact disc (30) on the circumference (10) of the belt/tread pack received on the shaping drum (2), and applying the compensating torque (A); **characterized in that** the at least one contact disc (30) is first brought to bear on the circumference (10) of the belt/tread pack so as to freely rotate and without a compensating torque (B) being applied, and is accelerated to the circumferential speed of the rotationally driven shaping drum (2) by frictional locking and is subsequently impinged with the compensating torque (B), wherein the drive torque (A) is continually measured, and the compensating torque (B) is actuated based on the measured drive torque (A) in such a way that the drive torque (B) is kept substantially constant.

7. Method according to Claim 6, **characterized in that** the at least one contact disc (30), after being brought to bear on the circumference (10) of the belt/tread pack, is displaced axially in relation to the shaping drum (2).

## Revendications

1. Dispositif de fabrication d'une ébauche de pneumatique (1), ledit dispositif comprenant un tambour de galbage (2), qui peut être entraîné en rotation avec un couple d'entraînement (A) et qui est destiné à recevoir une carcasse et un ensemble ceinture/bande de roulement de l'ébauche de pneumatique (1), et comprenant au moins un disque de roulement (30) qui peut être entraîné en rotation par un moteur d'entraînement (31) dans le sens opposé à celui du tambour de galbage (2) avec un couple de compensation (B), qui peut être déplacé radialement en direction du tambour de galbage (2) et qui est appliqué sur la circonférence (10) de l'ensemble ceinture/bande de roulement reçu sur le tambour de galbage (2), l'au moins un disque de roulement (30) pouvant être entraîné par un arbre d'entraînement du moteur d'entraînement (31) qui comporte un palier à roue libre et les paliers à roue libre étant disposés de telle sorte que l'au moins un disque de roulement (30) soit monté à rotation libre dans le sens opposé à celui du tambour de galbage (2) et accouplant avec transmission de couple les paliers à roue libre lorsque l'arbre d'entraînement est en rotation dans le sens de rotation du moteur d'entraînement (31), **caractérisé en ce qu'**un dispositif de régulation est prévu pour réguler le couple de compensation (B) généré par le moteur d'entraînement (31) en fonction du couple d'entraînement (A) afin d'entraîner le tambour de galbage (2), lequel dispositif de régulation comprend un module de mesure destiné à mesurer le couple d'entraînement (A) et un module de commande destiné à générer un signal de commande dérivé du couple d'entraînement mesuré (A) et destiné au couple de compensation (B) du moteur d'entraînement (31).

2. Dispositif selon la revendication 1, **caractérisé en ce que** les paliers à roue libre sont conçus comme des roues libres à roulements.

3. Dispositif selon la revendication 1 ou 2, **caractérisé en ce que** l'arbre d'entraînement peut être entraîné par le moteur d'entraînement (31) directement ou indirectement par le biais d'une transmission (32) montée entre le moteur d'entraînement (31) et l'arbre d'entraînement.

4. Dispositif selon l'une des revendications précédentes, **caractérisé en ce que** le module de régulation est conçu de telle sorte que l'au moins un disque de roulement (30) puisse être appliqué avec un moteur d'entraînement (31) désactivé sur la circonférence (10) de l'ensemble ceinture/bande de roulement puis le signal de commande puisse être généré et le moteur d'entraînement (31) puis être activé de manière appropriée.

5. Dispositif selon l'une des revendications 1 à 4, **caractérisé en ce que** l'au moins un disque de roulement (30) peut également être déplacé axialement suivant un axe de rotation du tambour de galbage (2).

6. Procédé de fabrication d'une ébauche pneumatique (1), ledit procédé comprenant les étapes suivantes :
a) fournir une carcasse et un ensemble ceinture/bande de roulement de l'ébauche de pneumatique (1) sur un tambour de couronnement rotatif (2) et entraîner en rotation le tambour de galbage (2) avec un couple d'entraînement (A) ;
b) déplacer radialement en direction du tambour de galbage (2) au moins un disque de roulement (30) qui peut tourner dans le sens opposé à celui du tambour de galbage (2) et qui peut être soumis à un couple de compensation (B) et placer ledit disque de roulement sur la circonférence (10) de l'ensemble ceinture/bande de roulement reçu sur le tambour de galbage (2) et appliquer couple de compensation (A) ;
**caractérisé en ce que** l'au moins un disque de roulement (30) est tout d'abord appliqué, en rotation libre et sans appliquer de couple de compensation (B), sur la circonférence (10) de l'ensemble ceinture/bande de roulement et est accéléré par friction jusqu'à atteindre la vitesse circonférentielle du tambour de galbage (2) entraîné en rotation puis est soumis au couple de compensation (B), le couple d'entraînement (A) étant mesuré en continu et le couple de compensation (B) étant réglé conformément au couple d'entraînement (A) mesuré de façon à maintenir le couple d'entraînement (B) sensible constant.

7. Procédé selon la revendication 6, **caractérisé en ce que** l'au moins un disque de roulement (30) est déplacé axialement par rapport au tambour de galbage (2) après avoir été placé sur la circonférence (10) de l'ensemble ceinture/bande de roulement.
